# EUROPEAN PATENT APPLICATION

(11) **EP 4 756 891 A1**
(43) Date of publication of application: **10.06.2026**
(21) Application number: 24848883.5
(22) Date of filing: 12.07.2024
(51) Int. Cl.: H01M 4/13, H01M 10/0587

(54) **NONAQUEOUS ELECTROLYTE SECONDARY BATTERY**

(30) Priority: 31.07.2023 JP 2023124506
(71) Applicant: Panasonic Energy Co., Ltd., Moriguchi-shi, Osaka 570-8511 (JP)
(72) Inventor: OKUNO Morihiko, Moriguchi-shi, Osaka 570-8511 (JP)
(74) Representative: Eisenführ Speiser
(86) International application number: PCT/JP2024/025230
(87) International publication number: WO 2025/028226

(57) **Abstract**

**In** this nonaqueous electrolyte secondary battery, at least one of a positive electrode plate and a negative electrode plate has mixture layers that are formed on both surfaces of a core body. Both surfaces of the core body are provided with a first exposure part and a second exposure part, which have a rectangular shape or a trapezoidal shape, and in which the core body is exposed. Each of the exposure parts is formed only in a partial range in the short-side direction, inward, in the short-side direction, from one edge in the short-side direction in one electrode plate. When one electrode plate is deployed in a planar shape and viewed from the thickness direction, each exposure part has a first edge part that extends along the short-side direction, a second edge part that is positioned closer to a winding end side than the first edge part, and a third edge part that extends along the long-side direction or along a direction that is inclined with respect to the long-side direction. With respect to first corner parts that are sandwiched between the first edge parts and the third edge parts and second corner parts that are sandwiched between the second edge parts and the third edge parts, at least one pair of corner parts are out of alignment with each other in the short-side direction.

## Description

### TECHNICAL FIELD

The present disclosure generally relates to a non-aqueous electrolyte secondary battery.

### BACKGROUND ART

In a non-aqueous electrolyte secondary battery, an electrode assembly that includes a positive electrode plate, a negative electrode plate, and a separator interposed between the positive electrode plate and the negative electrode plate, and a non-aqueous electrolyte are housed in an exterior housing can. For example, a cylindrical non-aqueous electrolyte secondary battery comprises a wound electrode assembly in which a positive electrode plate and a negative electrode plate are spirally wound with a separator interposed therebetween. For example, PATENT LITERATURE 1 describes a non-aqueous electrolyte secondary battery in which in a positive electrode plate included in a wound electrode assembly, a positive electrode lead is welded to an uncoated portion region (exposed portion) in which a positive electrode active material layer (positive electrode mixture layer) is not provided in a range narrower than the width (the length in a short direction) of the positive electrode plate. This reduces an area of the portion in which the positive electrode active material layer is peeled as the uncoated portion, contributing to a higher capacity of the battery.

### CITATION LIST

### PATENT LITERATURE

PATENT LITERATURE 1: Japanese Unexamined Patent Application Publication No. 2003-68271

### SUMMARY

Incidentally, in a non-aqueous electrolyte secondary battery, the electrode assembly repeatedly expands and contracts in the exterior housing can in accompany with charging and discharging. At this time, the positive electrode plate and the negative electrode plate expand and contract, so that a high surface pressure is applied between the electrode plates. In particular, in the wound electrode assembly, a compressive stress in a winding direction is the greatest force applied to the electrode plates. For example, in the positive electrode plate, the compressive stress is applied to an inside from both ends of the positive electrode plate in a longitudinal direction corresponding to the winding direction of the electrode assembly. On the other hand, in a configuration in which an exposed portion in which a positive electrode mixture layer is not provided is provided in only a portion of the positive electrode plate in a short direction as in Patent Literature 1, it is conceivable that the exposed portion is formed on each surface of the positive electrode plate in a thickness direction so that the exposed portion is at the same position when viewed from the thickness direction. In this configuration, during charging and discharging, the positive electrode mixture layer expands and contracts, whereas a positive electrode core including each exposed portion does not expand and contract. Therefore, a large stress concentration is likely to be induced near corner portions interposed between end edges of each exposed portion along the short direction of the positive electrode plate and end edges of each exposed portion along the longitudinal direction of the positive electrode plate. In this way, the stress concentration acting on the positive electrode core from both sides in the thickness direction is likely to cause damage to the positive electrode plate such as damage to the positive electrode core. A case has been described above in which an exposed portion is formed on a portion of the positive electrode plate in the short direction, but, even in a case in which an exposed portion is formed on a portion of the negative electrode plate in the short direction, the same inconvenience may occur.

A non-aqueous electrolyte secondary battery according to the present disclosure comprises an electrode assembly in which a positive electrode plate and a negative electrode plate are wound with a separator interposed between the positive electrode plate and the negative electrode plate, in which at least one electrode plate of the positive electrode plate and the negative electrode plate has a mixture layer formed on both surfaces of an elongated core, in a first surface of the both surfaces of the core, an intermediate portion of the first surface in a longitudinal direction corresponding to a winding direction of the electrode assembly is provided with a first exposed portion that has a rectangular shape or a trapezoidal shape and in which the core is exposed, in a second surface of the both surfaces of the core, an intermediate portion of the second surface in the longitudinal direction is provided with a second exposed portion that has a rectangular shape or a trapezoidal shape and in which the core is exposed, the first exposed portion and the second exposed portion are formed in only a partial range in a short direction from one-side end edge in the short direction corresponding to a winding axis direction of the electrode assembly toward an inside in the short direction in the one electrode plate, and have at least respective portions that overlap with each other in a thickness direction of the core, when the one electrode plate is viewed in the thickness direction in a state of being planarly unwound, each of the first exposed portion and the second exposed portion has a first end edge portion that extends along the short direction, a second end edge portion that is located on a winding finish side with respect to the first end edge portion and extends along the short direction, a third end edge portion that extends along the longitudinal direction or a direction inclined with respect to the longitudinal direction, a first corner portion interposed between the first end edge portion and the third end edge portion, and a second corner portion interposed between the second end edge portion and the third end edge portion, and a pair of corner portions of at least one of a pair of the first corner portions and a pair of the second corner portions in the first exposed portion and the second exposed portion deviate from each other in the short direction.

According to a non-aqueous electrolyte secondary battery according to the present disclosure, damage to an electrode plate during charging and discharging can be suppressed regardless of a configuration in which exposed portions are provided in only a portion of the electrode plate in a short direction.

### BRIEF DESCRIPTION OF DRAWING

FIG. 1 is an axial sectional view of a non-aqueous electrolyte secondary battery of an example of embodiments.
FIG. 2 is a transparent perspective view of a positive electrode plate in which a range including exposed portions in the positive electrode plate in an unwound state is illustrated in an exaggerated manner, in an example of the embodiments.
FIG. 3(a) is a view of the positive electrode plate in an unwound state as viewed in a thickness direction in an example of the embodiments, and FIG. 3(b) is an enlarged view of a portion A in FIG. 3(a).
FIG. 4 is a transparent perspective view of a positive electrode plate in which a range including exposed portions in the positive electrode plate in an unwound state is illustrated in an exaggerated manner, in another example of the embodiments.
FIG. 5(a) is a view of the positive electrode plate in an unwound state as viewed in a thickness direction in another example of the embodiments, and FIG. 5(b) is an enlarged view of a portion B in FIG. 5(a).
FIG. 6 is a diagram corresponding to FIG. 3(b) in another example of the embodiments.
FIG. 7 is a diagram corresponding to FIG. 3(b) in another example of the embodiments.
FIG. 8 is a diagram corresponding to FIG. 3(b) in another example of the embodiments.

### DESCRIPTION OF EMBODIMENTS

Hereinafter, an example of embodiments of a non-aqueous electrolyte secondary battery according to the present disclosure will be described in detail with reference to the drawings. Note that the non-aqueous electrolyte secondary battery according to the present disclosure is not limited to embodiments described below.

Hereinafter, a cylindrical battery in which a wound electrode assembly 14 is housed in a bottomed cylindrical exterior housing can 16 will be exemplified as a non-aqueous electrolyte secondary battery, but an exterior body of the battery is not limited to a cylindrical exterior housing can. The non-aqueous electrolyte secondary battery according to the present disclosure may be, for example, a rectangular battery comprising a rectangular exterior housing can, or a pouch battery comprising an exterior body comprised of laminated sheets including a metal layer and a resin layer.

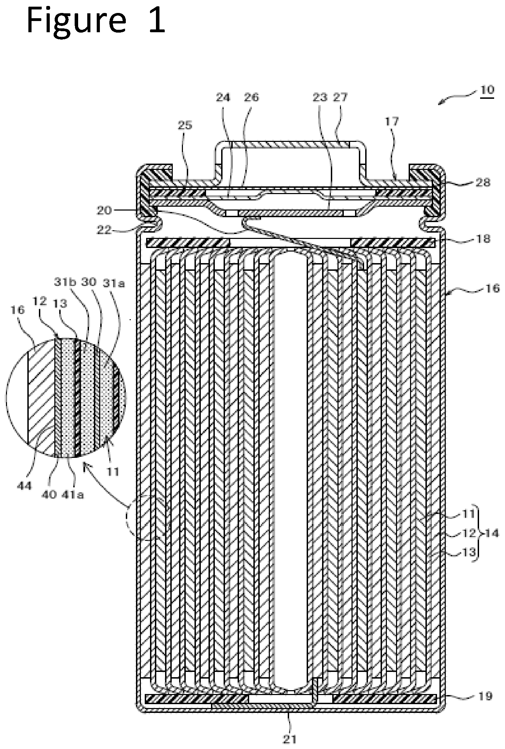

FIG. 1 is a sectional view of a non-aqueous electrolyte secondary battery 10 of an example of embodiments. As illustrated in FIG. 1, the non-aqueous electrolyte secondary battery 10 comprises the electrode assembly 14 that includes a positive electrode plate 11, a negative electrode plate 12, and a separator 13 so that the positive electrode plate 11 and the negative electrode plate 12 are wound with the separator 13 interposed therebetween. The non-aqueous electrolyte secondary battery 10 further comprises a bottomed cylindrical exterior housing can 16 that houses the electrode assembly 14, and a sealing assembly 17 with which an opening portion of the exterior housing can 16 is capped. A non-aqueous electrolyte is housed in the exterior housing can 16 together with the electrode assembly 14. The exterior housing can 16 includes a grooved part 22 formed on a side wall, and the sealing assembly 17 is supported by the grooved part 22 so that the opening portion of the exterior housing can 16 is capped with the sealing assembly 17. Hereinafter, for convenience of description, the sealing assembly 17 side of the non-aqueous electrolyte secondary battery 10 will be described as the upper side, and the bottom portion side of the exterior housing can 16 will be described as the lower side.

The non-aqueous electrolyte has ion conductivity (for example, lithium ion conductivity). The non-aqueous electrolyte includes a non-aqueous solvent, and an electrolyte salt dissolved in the non-aqueous solvent. The non-aqueous electrolyte is not limited to a liquid electrolyte (non-aqueous electrolyte solution), and may be a solid-state electrolyte that uses a gel-state polymer or the like. The non-aqueous electrolyte secondary battery 10 is preferably a lithium ion battery. For the electrolyte salt, for example, a lithium salt such as LiBF₄ or LiPF₆ is used. For a non-aqueous solvent, for example, there may be used esters such as ethylene carbonate (EC), propylene carbonate (PC), dimethyl carbonate (DMC), ethylmethyl carbonate (EMC), diethyl carbonate (DEC), and methyl propionate (MP), ethers, nitriles, amides, or a mixture solvent of two or more of these. The non-aqueous solvent may contain a halogen-substituted product obtained by substituting at least a part of hydrogen in these solvents described above with a halogen atom such as fluorine.

Examples of the halogen-substituted product include fluorinated cyclic ester carbonates such as fluoroethylene carbonate (FEC), fluorinated chain ester carbonates, and fluorinated chain ester carboxylates such as fluoromethyl propionate (FMP). In order to suppress the deterioration in charging-discharging cycle characteristics or improve the input characteristics of the non-aqueous electrolyte secondary battery, the non-aqueous electrolyte preferably contains FEC in an amount of greater than or equal to 5 mass% relative to the mass of the non-aqueous electrolyte, and more preferably contains FEC in an amount of greater than or equal to 5 mass% and less than or equal to 15 mass%.

As a solid-state electrolyte, for example, a solid-state or gel-state polymer electrolyte, an inorganic solid-state electrolyte, or the like is used. The polymer electrolyte, for example, includes a lithium salt and a matrix polymer, or includes a non-aqueous solvent, a lithium salt, and a matrix polymer. As the matrix polymer, for example, a polymer material which absorbs and gels the non-aqueous solvent is used. As the polymer material, for example, fluororesin, acrylic resin, or polyether resin is used. As the inorganic solid-state electrolyte, for example, a material known in an all-solid-state lithium ion secondary battery and the like (for example, an oxide-based solid-state electrolyte, a sulfide-based solid-state electrolyte, and a halide-based solid-state electrolyte) is used.

The electrode assembly 14 has a wound structure in which the positive electrode plate 11 and the negative electrode plate 12 are spirally wound with the separator 13 interposed therebetween. Each of the positive electrode plate 11, the negative electrode plate 12, and the separator 13 is a band-shaped elongate body, and the positive electrode plate 11, the negative electrode plate 12, and the separator 13 are spirally wound so as to be alternately stacked in a radial direction of the electrode assembly 14. The negative electrode plate 12 is formed to be one size larger than the positive electrode plate 11 in order to prevent precipitation of lithium. That is, the negative electrode plate 12 is formed to be longer in the longitudinal direction and the short direction than the positive electrode plate 11. The two separators 13 are each formed to be one size larger than at least the positive electrode plate 11, and are disposed so as to interpose, for example, the positive electrode plate 11 therebetween.

A positive electrode tab 20 and a negative electrode tab 21 are connected to the electrode assembly 14. The positive electrode tab 20 is electrically connected to the positive electrode plate 11 and the sealing assembly 17. The positive electrode tab 20 is provided at a center portion of the positive electrode plate 11 in the longitudinal direction, the center portion being a position away from a winding start-side end and winding finish-side end of the electrode assembly 14.

The negative electrode tab 21 is joined to a first core exposed portion (not illustrated) provided on a winding start-side end portion which is one end portion of the negative electrode plate 12 in the longitudinal direction, the one end portion being located on a winding start side of the negative electrode plate 12. In the example illustrated in FIG. 1, the positive electrode tab 20 extends toward the sealing assembly 17 side through an opening portion in an upper insulating plate 18 and is joined to a lower surface of the sealing assembly 17, so that the sealing assembly 17 serves as a positive electrode terminal. The negative electrode tab 21 is bent toward a hollow portion in the electrode assembly 14 through a through hole in an annular lower insulating plate 19, and is connected to a bottom portion inner surface of the exterior housing can 16 by means of welding or the like, so that the exterior housing can 16 serves as a negative electrode terminal.

In an outermost peripheral surface of the electrode assembly 14, the negative electrode plate 12 is disposed and a second core exposed portion 44 in which a surface of the negative electrode core 40 is exposed is provided. The core exposed portion 44 is in contact with an inner peripheral surface of the exterior housing can 16. The core exposed portion 44 contacts the inner peripheral surface of the exterior housing can 16 serving as the negative electrode terminal, so that both end portions in the longitudinal direction of the negative electrode plate 12 and the exterior housing can 16 are electrically connected to each other, so that good current collectability can be ensured. The core exposed portion 44 may be provided in a portion of the outermost peripheral surface of the electrode assembly 14, but is preferably provided at an entire area of the outermost surface. For example, a portion in which the negative electrode mixture layer is not present in each surface of the negative electrode core 40 is provided in a length greater than or equal to one turn of the electrode assembly 14 from the winding finish end of the negative electrode plate 12.

The positive electrode plate 11 has a positive electrode core 30, and a positive electrode mixture layer 31a, 31b formed on each surface of the core. Specifically, the positive electrode mixture layer 31a is formed on a first surface of the positive electrode core 30, and the positive electrode mixture layer 31b is formed on a second surface of the positive electrode core 30. For the positive electrode core 30, there can be used a foil of metal such as aluminum or an aluminum alloy, which is stable within a potential range of the positive electrode plate 11, a film in which such a metal is disposed on a surface layer thereof, or the like. The positive electrode mixture layer 31a, 31b includes a positive electrode active material, a conductive agent such as acetylene black, and a binder such as polyvinylidene fluoride (PVdF), and is preferably formed on each surface of the positive electrode core 30. A thickness of the positive electrode mixture layer 31a, 31b is, for example, greater than or equal to 40 µm and less than or equal to 100 µm. For the positive electrode active material, for example, a lithium-transition metal composite oxide containing Ni, Co, Mn, Al or the like is used. Note that the positive electrode tab 20 is preferably joined directly to the positive electrode core 30 by means of ultrasonic welding or the like.

The negative electrode plate 12 has a negative electrode core 40, and negative electrode mixture layers formed on each surface of the negative electrode core 40. For the negative electrode core 40, there can be used a foil of metal such as copper or a copper alloy, which is stable within a potential range of the negative electrode plate 12, a film in which such a metal is disposed on a surface layer thereof, or the like. The negative electrode mixture layer 41a, 41b includes a negative electrode active material, and a binder such as a styrene-butadiene rubber (SBR). A thickness of the negative electrode mixture layer 41a, 41b is, for example, greater than or equal to 40 µm and less than or equal to 100 µm. For the negative electrode active material, for example, graphite, or an Si-containing material is used. The negative electrode tab 21 is preferably joined directly to the negative electrode core 40 by means of ultrasonic welding or the like.

The exterior housing can 16 is a bottomed cylindrical metallic container. A gasket 28 is provided between the exterior housing can 16 and the sealing assembly 17, so that an interior of the battery is sealed. The exterior housing can 16 has a grooved part 22 that is formed by, for example, pressing a side surface portion from the outside to support the sealing assembly 17. The grooved part 22 is preferably formed in an annular shape along a circumferential direction of the exterior housing can 16, and supports the sealing assembly 17 with an upper surface of the grooved part 22. An upper end portion of the exterior housing can 16 is bent inwardly and is crimped to a peripheral edge portion of the sealing assembly 17.

The sealing assembly 17 has a structure in which a terminal plate 23, a lower vent member 24, an insulating member 25, an upper vent member 26, and a cap 27 are stacked in this order from the electrode assembly 14 side. Each member constituting the sealing assembly 17 has, for example, a disk shape or a ring shape, and each member except for the insulating member 25 is electrically connected to each other. The lower vent member 24 and the upper vent member 26 are connected to each other at respective central portions thereof, and the insulating member 25 is interposed between the peripheral edge portions of the lower vent member 24 and the upper vent member 26. When an internal pressure of the battery increases, the lower vent member 24 is deformed in such a manner to push up the upper vent member 26 toward the cap 27 side, and ruptures, so that a current path between the lower vent member 24 and the upper vent member 26 is cut off. When the internal pressure further increases, the upper vent member 26 ruptures, and gas is discharged from an opening portion of the cap 27.

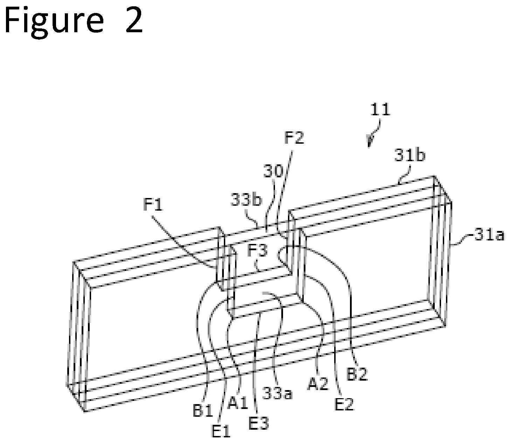

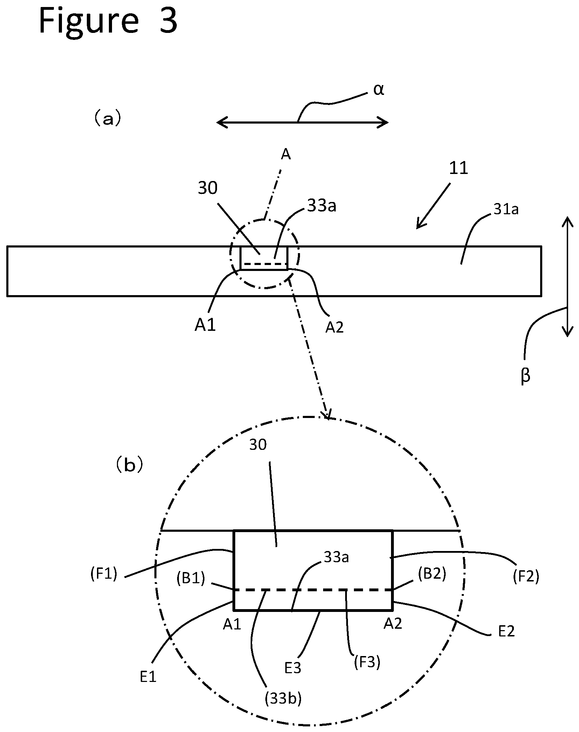

Hereinafter, a configuration of the positive electrode plate 11 included in the electrode assembly 14 will be described in detail with reference to FIGS. 2 and 3. FIG. 2 is a transparent perspective view of the positive electrode plate 11 in which a range including the exposed portions 33a and 33b in the positive electrode plate 11 in an unwound state is illustrated in an exaggerated manner. FIG. 3(a) is a view of the positive electrode plate 11 in an unwound state as viewed in a thickness direction, and FIG. 3(b) is an enlarged view of a portion A in FIG. 3(a).

As described above, the positive electrode plate 11 has the positive electrode core 30, and the positive electrode mixture layer 31a, 31b formed on each surface of the positive electrode core 30.

In the first surface (front surface in FIGS. 2 and 3) of the positive electrode plate 11, a first exposed portion 33a in which a surface of the positive electrode core 30 is exposed is formed on one-side portion (upper portion in FIGS. 2 and 3) of the positive electrode plate 11 in the short direction in the center portion of the positive electrode plate 11 in the longitudinal direction (left-right direction in FIGS. 2 and 3) of the positive electrode plate 11. In FIG. 3, the longitudinal direction of the positive electrode plate 11 is indicated by an arrow α, and the short direction of the positive electrode plate 11 is indicated by an arrow β. The longitudinal direction of the positive electrode plate 11 corresponds to a winding direction of the electrode assembly 14, and the short direction of the positive electrode plate 11 corresponds to a winding axis direction.

In the second surface (rear surface in FIGS. 2 and 3) of the positive electrode plate 11, a second exposed portion 33b in which a surface of the positive electrode core 30 is exposed is formed on one-side portion of the positive electrode plate 11 in the short direction in the center portion of the positive electrode plate 11 in the longitudinal direction. That is, the first exposed portion 33a and the second exposed portion 33b are each formed on only a partial range in the short direction from one-side end edge (upper end edge in FIGS. 2 and 3) in the short direction toward an inside in the short direction in the positive electrode plate 11. The first exposed portion 33a and the second exposed portion 33b have at least respective portions that overlap with each other in the thickness direction of the positive electrode core 30.

Each exposed portion 33a, 33b has a rectangular shape as viewed in the thickness direction of the positive electrode plate 11. Each exposed portion 33a, 33b is formed without applying a positive electrode mixture slurry on the positive electrode core 30 so that the positive electrode mixture layer 31 is not provided. Alternatively, each exposed portion 33a, 33b may be formed by peeling a part of the positive electrode mixture layer 31. Thus, two exposed portions 33a and 33b are formed so as to contact only the one-side end edge of the positive electrode plate 11 in the short direction. Therefore, the positive electrode mixture layers 31a and 31b are present on the other side of the two exposed portions 33a and 33b in the short direction, so that a higher capacity of the battery can be achieved as compared to a case where exposed portions are formed across both end edges of the positive electrode plate 11 in the short direction. Note that the position where the exposed portion 33a, 33b is formed is not limited to a center portion of the positive electrode plate 11 in the longitudinal direction, and it is only required that the exposed portion 33a, 33b is formed in an intermediate portion of the positive electrode plate 11 in the longitudinal direction that is spaced apart from both ends of the positive electrode plate **11** in the longitudinal direction. For example, the exposed portions 33a and 33b may be formed at positions displaced to one end portion of the positive electrode plate **11** in the longitudinal direction or at a plurality of positions spaced apart from each other in the longitudinal direction.

The positive electrode tab 20 illustrated in FIG. 1 is joined to one exposed portion of the exposed portions 33a and 33b, for example, to the first exposed portion 33a in the first surface of the positive electrode core 30. The positive electrode tab 20 is connected to one end side of the positive electrode core 30 in the short direction and a range not exceeding the center in the short direction. This makes it possible to reduce the overlapping length of the positive electrode tab 20 on the positive electrode core 30, so that the positive electrode tab 20 can be excluded from the vicinity of the center of the electrode assembly 14 in the winding axis direction. This makes it easy to prevent the positive electrode tab 20 inside the battery from penetrating the separator and the like even if an impact or stress is applied to the battery from the outside. This makes it possible to improve the safety of the non-aqueous electrolyte secondary battery 10. Note that each exposed portion 33a, 33b may be formed in a range of exceeding the center in the short direction from one end side of the positive electrode core 30 in the short direction.

As illustrated in FIG. 3, when the positive electrode plate 11 is viewed in the thickness direction in a state of being planarly unwound, the first exposed portion 33a has a first end edge portion E1 and a second end edge portion E2 that are spaced away from each other in the longitudinal direction and extend along the short direction, and a third end edge portion E3 that extends along the longitudinal direction. The first end edge portion E1 is located on the winding start side, and the second end edge portion E2 is located on the winding finish side. Therefore, the second end edge portion E2 is located on the winding finish side with respect to the first end edge portion E1.

On the other hand, when the positive electrode plate 11 is viewed in the thickness direction in a state of being planarly unwound, the second exposed portion 33b has a first end edge portion F1 and a second end edge portion F2 that are spaced away from each other in the longitudinal direction and extend along the short direction, and a third end edge portion F3 that extends along the longitudinal direction. The first end edge portion F1 is located on the winding start side, and the second end edge portion F2 is located on the winding finish side. Therefore, the second end edge portion F2 is located on the winding finish side with respect to the first end edge portion F1. In FIG. 3, each end edge portion and each point that are located on the back side of the positive electrode plate 11 are indicated by parenthesized reference signs.

In the present embodiment, points A1 and B1 which are corner portions interposed between the first end edge portions E1 and F1 and the third end edge portions E3 and F3, respectively, deviate from each other in the short direction, and points A2 and B2 which are corner portions interposed between the second end edge portions E2 and F2 and the third end edge portions E3 and F3, respectively, deviate from each other in the short direction. The points A1 and B1 correspond to first corner portions. The points A2 and B2 correspond to second corner portions. Specifically, the first end edge portion E1 and the second end edge portion E2 are longer than the first end edge portion F1 and the second end edge portion F2 in the short direction β, respectively.

This makes it possible to, when the positive electrode plate 11 repeatedly expands and contracts in accompanying with charging and discharging of the non-aqueous electrolyte secondary battery 10, displace positions where the stress concentration is increased in both surfaces of the positive electrode plate 11 from a position overlapping in the thickness direction of the positive electrode plate 11 even if the stress concentration tends to occur near the corner portions of the exposed portions 33a and 33b in which the positive electrode mixture layers 31a and 31b are exposed. This makes it possible to displace positions where a force acting near the corner portions of the exposed portions 33a and 33b in the positive electrode core 30 is increased from a position overlapping in the thickness direction of the positive electrode plate 11 in both surfaces of the positive electrode plate 11. This makes it possible to reduce the stress concentration near the corner portions of the exposed portions 33a and 33b of the positive electrode plate 11 regardless of the configuration in which the exposed portions are provided in only a portion of the positive electrode plate 11 in the short direction, which can suppress damage to the positive electrode plate 11 such as damage to the positive electrode core 30 during charging and discharging.

When the positive electrode plate 11 is viewed in the thickness direction in a state of being planarly unwound, a shortest distance in the short direction between the point A1 which is a corner portion of the first exposed portion 33a and the point B1 which is a corner portion of the second exposed portion 33b is greater than or equal to 0.5 mm. When the positive electrode plate 11 is viewed in the thickness direction in the same manner, a shortest distance in the short direction between the point A2 which is a corner portion of the first exposed portion 33a and the point B2 which is a corner portion of the second exposed portion 33b is also greater than or equal to 0.5 mm. Thus, the effect of reducing the damage to the positive electrode plate 11 is enhanced.

When the positive electrode plate 11 is viewed in the thickness direction in a state of being planarly unwound, the first end edge portion E1 and the second end edge portion E2 of the first exposed portion 33a are present at the same positions as the first end edge portion F1 and the second end edge portion F2 of the second exposed portion 33b in the longitudinal direction α, respectively. This makes it possible to further reduce a decrease amount of the positive electrode mixture layer 31a, 31b due to formation of the exposed portion, which can achieve a higher capacity of the battery. In addition, this makes it possible to increase the uniformity of the reaction with the negative electrode plate 12 at both sides of the positive electrode plate 11 in the thickness direction.

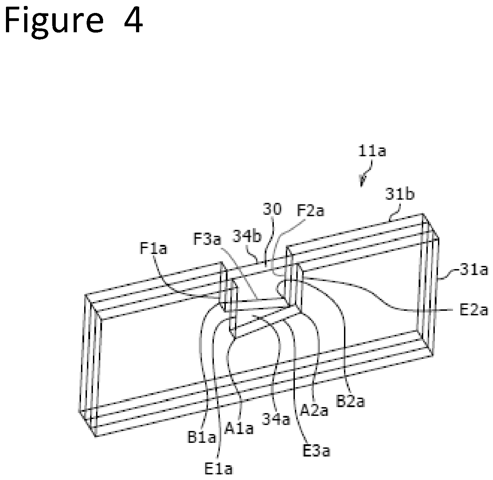

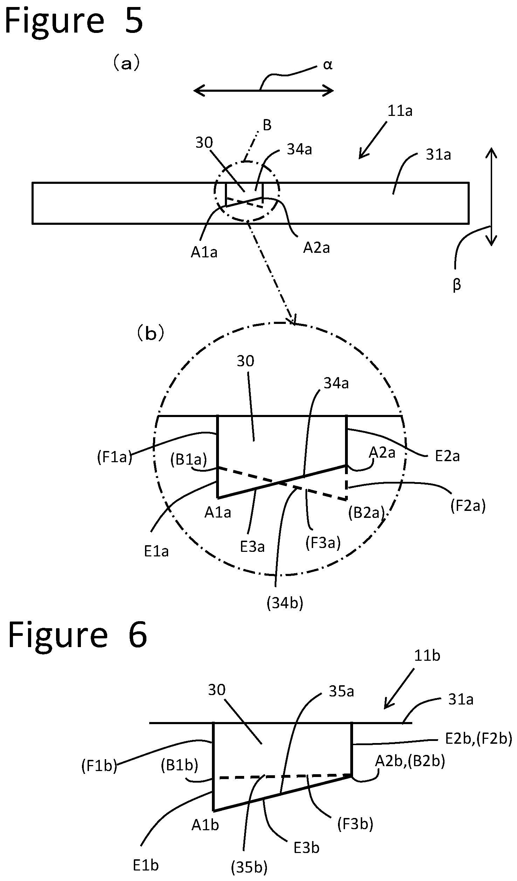

FIG. 4 is a transparent perspective view of a positive electrode plate 11a in which a range including exposed portions in the positive electrode plate 11a in an unwound state is illustrated in an exaggerated manner, in another example of the embodiments. FIG. 5(a) is a view of the positive electrode plate 11a in an unwound state as viewed in a thickness direction in another example of the embodiments, and FIG. 5(b) is an enlarged view of a portion B in FIG. 5(a).

In the configuration of this example, the shape of each exposed portion 34a, 34b is a trapezoidal shape when the positive electrode plate 11a is viewed in the thickness direction. As illustrated in FIG. 5, when the positive electrode plate 11a is viewed in the thickness direction in a state of being planarly unwound, a first exposed portion 34a has a first end edge portion E1a and a second end edge portion E2a that are spaced away from each other in the longitudinal direction and extend along the short direction, and a third end edge portion E3a that extends along a direction inclined with respect to the longitudinal direction. The first end edge portion E1a is longer than the second end edge portion E2a. On the other hand, the second exposed portion 34b has a first end edge portion F1a and a second end edge portion F2a that are spaced away from each other in the longitudinal direction and extend along the short direction, and a third end edge portion F3a that extends along a direction inclined with respect to the longitudinal direction. The second end edge portion F2a is longer than the first end edge portion F1a. Thus, the third end edge portion E3a of the first exposed portion 34a and the third end edge portion F3a of the second exposed portion 34b are inclined in opposite directions to each other. In FIG. 5, each end edge portion and each point that are located on the back side of the positive electrode plate 11a are indicated by parenthesized reference signs.

In this example, points A1a and B1a which are corner portions interposed between the first end edge portions E1a and F1a and the third end edge portions E3a and F3a, respectively, deviate from each other in the short direction, and points A2a and B2a which are corner portions interposed between the second end edge portions E2a and F2a and the third end edge portions E3a and F3a, respectively, deviate from each other in the short direction. The points A1a and B1a correspond to first corner portions. The points A2a and B2a correspond to second corner portions. In this example as well, this makes it possible to suppress damage to the positive electrode plate 11a during charging and discharging, regardless of the configuration in which the exposed portions are provided in only a portion of the positive electrode plate 11a in the short direction, similar to the configuration of FIGS. 1 to 3.

When the positive electrode plate 11a is viewed in the thickness direction in a state of being planarly unwound, a shortest distance in the short direction between the point A1a which is a corner portion of the first exposed portion 34a and the point B1a which is a corner portion of the second exposed portion 34b is greater than or equal to 0.5 mm. When the positive electrode plate 11a is viewed in the thickness direction in the same manner, a shortest distance in the short direction between the point A2a which is a corner portion of the first exposed portion 34a and the point B2a which is a corner portion of the second exposed portion 34b is also greater than or equal to 0.5 mm. Thus, the effect of reducing the damage to the positive electrode plate 11a during charging and discharging is enhanced. In this example, the other configurations and operations are the same as the configuration of FIGS. 1 to 3.

FIG. 6 is a diagram corresponding to FIG. 3(b) in another example of the embodiments. In the configuration of this example, a second exposed portion 35b of a positive electrode plate 11b has a rectangular shape, but a first exposed portion 35a has a trapezoidal shape. Specifically, the shape of the first exposed portion 35a is the same as the shape of the first exposed portion 34a having the configuration illustrated in FIGS. 4 and 5. On the other hand, the shape of the second exposed portion 35b is the same as the shape of the second exposed portion 33b having the configuration illustrated in FIGS. 1 to 3. The positions of the first end edge portions E1b and F1b of the exposed portions 35a and 35b are the same in the longitudinal direction of the positive electrode plate 11c, and the positions of the second end edge portions E2b and F2b are the same in the longitudinal direction of the positive electrode plate 11c.

In this example, points A1b and B1b which are corner portions interposed between the first end edge portions E1b and F1b and the third end edge portions E3b and F3b, respectively, are present at different positions in the short direction. On the other hand, the positions in the short direction of points A2b and B2b which are corner portions interposed between the second end edge portions E2b and F2b and the third end edge portions E3b and F3b, respectively, coincide with each other. The points A1b and B1b correspond to first corner portions. The points A2b and B2b correspond to second corner portions. Thus, when a pair of corner portions of at least one of a pair of corner portions on the side of the first end edge portions E1b and F1b and a pair of corner portions on the side of the second end edge portions E2b and F2b deviate from each other in the short direction, the effect is reduced as compared to the configuration of each example illustrated in FIGS. 1 to 5, but the damage to the positive electrode plate 11b during charging and discharging can be suppressed. In this example, the other configurations and operations are the same as the configuration of FIGS. 1 to 3 or the configuration of FIGS. 4 and 5.

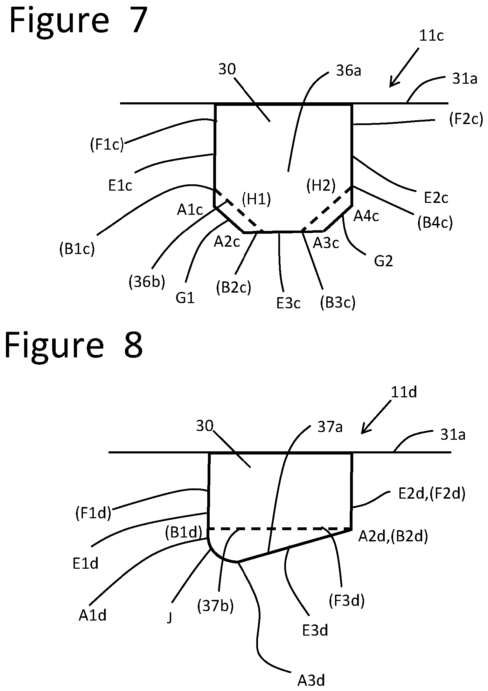

FIG. 7 is a diagram corresponding to FIG. 3(b) in another example of the embodiments. In the configuration of this example, when a positive electrode plate 11c is viewed in the thickness direction, a first exposed portion 36a has a first end edge portion E1c and a second end edge portion E2c that are spaced away from each other in the longitudinal direction of the positive electrode plate 11c and extend along the short direction, and a third end edge portion E3c that extends along the longitudinal direction. The first end edge portion E1c and the second end edge portion E2c have the same length. In a case of this example, corner portions of the first exposed portion 36a are not points but are a linear portion G1 connecting a point A1c and a point A2c and a linear portion G2 connecting a point A3c and a point A4c. The linear portion G1 corresponds to a first corner portion, and the linear portion G2 corresponds to a second corner portion.

On the other hand, a second exposed portion 36b has the same shape as the first exposed portion 36a, but a first end edge portion F1c and a second end edge portion F2c are shorter than the first end edge portion E1c and the second end edge portion E2c of the first exposed portion 36a, respectively. Therefore, when the positive electrode plate 11c is viewed in the thickness direction, a linear portion H1 and a linear portion H2 which are two corner portions of the second exposed portion 36b deviate in the short direction from the linear portion G1 and the linear portion G2 of the first exposed portion 36a, respectively. The linear portion H1 corresponds to a first corner portion, and the linear portion H2 corresponds to a second corner portion.

When the positive electrode plate 11c is viewed in the thickness direction, a shortest distance in the short direction between the linear portion G1 of the first exposed portion 36a and the linear portion H1 of the second exposed portion 36b is greater than or equal to 0.5 mm. When the positive electrode plate 11c is viewed in the thickness direction, a shortest distance in the short direction between the linear portion G2 of the first exposed portion 36a and the linear portion H2 of the second exposed portion 36b is also greater than or equal to 0.5 mm. In this example, the other configurations and operations are the same as the configuration of FIGS. 1 to 3.

FIG. 8 is a diagram corresponding to FIG. 3(b) in another example of the embodiments. In the configuration of this example, a first exposed portion 37a of a positive electrode plate 11d has a trapezoidal shape and a second exposed portion 37b has a rectangular shape, similar to the configuration of FIG. 6. A first end edge portion E1d and a second end edge portion E2d of the first exposed portion 37a extend along the short direction of the positive electrode plate 11d. On the other hand, in the first exposed portion 37a, a corner portion interposed between the first end edge portion E1d and a third end edge portion E3d is an arc-shaped curved portion J connecting points A1d and A3d. The curved portion J corresponds to a first corner portion.

When the positive electrode plate 11d is viewed in the thickness direction, a point B1d which is a corner portion interposed between a first end edge portion F1d and a third end edge portion F3d of the second exposed portion 37b and the curved portion J which is a corner portion of the first exposed portion 37a deviate from each other in the short direction. The point B1d corresponds to a first corner portion. In this example, the other configurations and operations are the same as the configuration of FIG. 6.

As described in each example described above, in each exposed portion of the positive electrode plate, a corner portion interposed between the first end edge portion and the second end edge portion may be any one of a point, a linear portion, and a curved portion. In each example described above, a configuration may be adopted in which only a pair of second corner portions out of a pair of first corner portions and a pair of second corner portions in the first exposed portion and the second exposed portion deviate from each other in the short direction.

In each example described above, a case has been described in which an electrode plate in which the exposed portions are provided in only a portion in the short direction is the positive electrode plate, but a configuration may be adopted in which the exposed portions are provided in only a portion in the short direction in both surfaces of the negative electrode plate in the thickness direction. This configuration makes it possible to suppress damage to the negative electrode plate such as damage to the negative electrode core during charging and discharging, regardless of the configuration in which the exposed portions are provided in only a portion of the negative electrode plate in the short direction.

The present disclosure will be further described by the following embodiments.

Configuration 1: A non-aqueous electrolyte secondary battery comprising: an electrode assembly in which a positive electrode plate and a negative electrode plate are wound with a separator interposed between the positive electrode plate and the negative electrode plate, wherein
at least one electrode plate of the positive electrode plate and the negative electrode plate has a mixture layer formed on both surfaces of an elongated core,
in a first surface of the both surfaces of the core, an intermediate portion of the first surface in a longitudinal direction corresponding to a winding direction of the electrode assembly is provided with a first exposed portion that has a rectangular shape or a trapezoidal shape and in which the core is exposed,
in a second surface of the both surfaces of the core, an intermediate portion of the second surface in the longitudinal direction is provided with a second exposed portion that has a rectangular shape or a trapezoidal shape and in which the core is exposed,
the first exposed portion and the second exposed portion are formed in only a partial range in a short direction from one-side end edge in the short direction corresponding to a winding axis direction of the electrode assembly toward an inside in the short direction in the one electrode plate, and have at least respective portions that overlap with each other in a thickness direction of the core,
when the one electrode plate is viewed in the thickness direction in a state of being planarly unwound, each of the first exposed portion and the second exposed portion has a first end edge portion that extends along the short direction, a second end edge portion that is located on a winding finish side with respect to the first end edge portion and extends along the short direction, a third end edge portion that extends along the longitudinal direction or a direction inclined with respect to the longitudinal direction, a first corner portion interposed between the first end edge portion and the third end edge portion, and a second corner portion interposed between the second end edge portion and the third end edge portion, and
a pair of corner portions of at least one of a pair of the first corner portions and a pair of the second corner portions in the first exposed portion and the second exposed portion deviate from each other in the short direction.

Configuration 2: The non-aqueous electrolyte secondary battery described in configuration 1, wherein
when the one electrode plate is viewed in the thickness direction in a state of being planarly unwound, a shortest distance in the short direction between the pair of corner portions of the at least one is greater than or equal to 0.5 mm.

Configuration 3: The non-aqueous electrolyte secondary battery described in configuration 1 or 2, wherein
when the one electrode plate is viewed in the thickness direction in a state of being planarly unwound, the first end edge portion and the second end edge portion of the first exposed portion are present at the same positions as the first end edge portion and the second end edge portion of the second exposed portion in the longitudinal direction, respectively.

Configuration 4: The non-aqueous electrolyte secondary battery described in any one of configurations 1 to 3, wherein
the one electrode plate is the positive electrode plate.

### REFERENCE SIGNS LIST

10 Non-aqueous electrolyte secondary battery, 11, 11a to 11d Positive electrode plate, 12 Negative electrode plate, 13 Separator, 14 Electrode assembly, 16 Exterior housing can, 17 Sealing assembly, 18 Upper insulating plate, 19 Lower insulating plate, 20 Positive electrode tab, 21 Negative electrode tab, 22 Grooved part, 23 Terminal plate, 24 Lower vent member, 25 Insulating member, 26 Upper vent member, 27 Cap, 28 Gasket, 30 Positive electrode core, 33a, 34a, 35a, 36a, 37a First exposed portion, 33b, 34b, 35b, 36b, 37b Second exposed portion, 31a, 31b Positive electrode mixture layer, 40 Negative electrode core, 41 Negative electrode mixture layer, 44 Second core exposed portion

## Claims

1. A non-aqueous electrolyte secondary battery comprising: an electrode assembly in which a positive electrode plate and a negative electrode plate are wound with a separator interposed between the positive electrode plate and the negative electrode plate, wherein
at least one electrode plate of the positive electrode plate and the negative electrode plate has a mixture layer formed on both surfaces of an elongated core,
in a first surface of the both surfaces of the core, an intermediate portion of the first surface in a longitudinal direction corresponding to a winding direction of the electrode assembly is provided with a first exposed portion that has a rectangular shape or a trapezoidal shape and in which the core is exposed,
in a second surface of the both surfaces of the core, an intermediate portion of the second surface in the longitudinal direction is provided with a second exposed portion that has a rectangular shape or a trapezoidal shape and in which the core is exposed,
the first exposed portion and the second exposed portion are formed in only a partial range in a short direction from one-side end edge in the short direction corresponding to a winding axis direction of the electrode assembly toward an inside in the short direction in the one electrode plate, and have at least respective portions that overlap with each other in a thickness direction of the core,
when the one electrode plate is viewed in the thickness direction in a state of being planarly unwound, each of the first exposed portion and the second exposed portion has a first end edge portion that extends along the short direction, a second end edge portion that is located on a winding finish side with respect to the first end edge portion and extends along the short direction, a third end edge portion that extends along the longitudinal direction or a direction inclined with respect to the longitudinal direction, a first corner portion interposed between the first end edge portion and the third end edge portion, and a second corner portion interposed between the second end edge portion and the third end edge portion, and
a pair of corner portions of at least one of a pair of the first corner portions and a pair of the second corner portions in the first exposed portion and the second exposed portion deviate from each other in the short direction.

2. The non-aqueous electrolyte secondary battery according to claim 1, wherein
when the one electrode plate is viewed in the thickness direction in a state of being planarly unwound, a shortest distance in the short direction between the pair of corner portions of the at least one is greater than or equal to 0.5 mm.

3. The non-aqueous electrolyte secondary battery according to claim 1, wherein
when the one electrode plate is viewed in the thickness direction in a state of being planarly unwound, the first end edge portion and the second end edge portion of the first exposed portion are present at the same positions as the first end edge portion and the second end edge portion of the second exposed portion in the longitudinal direction, respectively.

4. The non-aqueous electrolyte secondary battery according to claim 1, wherein
the one electrode plate is the positive electrode plate.
